# EUROPEAN PATENT APPLICATION

(11) **EP 2 631 462 A1**
(43) Date of publication of application: **28.08.2013**
(21) Application number: 11834016.5
(22) Date of filing: 14.10.2011
(51) Int. Cl.: F02M 35/024

(54) **LATCH PROTECTION STRUCTURE FOR VEHICLE-MOUNTED OBJECT**

(30) Priority: 19.10.2010 JP 2010234152
(71) Applicant: Hino Motors Ltd., Tokyo 191-8660 (JP)
(72) Inventor: TOBE, Kuniharu, Hino-shi Tokyo 191-8660 (JP); KIMURA, Masahiro, Hino-shi Tokyo 191-8660 (JP)
(74) Representative: Köhler, Walter
(86) International application number: PCT/JP2011/005762
(87) International publication number: WO 2012/053170

(57) **Abstract**

Ribs 13 are protruded from a lid 8 and a housing body so as to prevent a sphere B with a diameter of 100 mm stipulated in outer protrusion requirements from contacting with a latch 12.

## Description

### Technical Field

The present invention relates to a latch protection structure for a vehicle-mounted object.

### Background Art

Generally, an outer protrusion in a vehicle is defined as that which is partially protruded from an outer surface of a vehicle body and which may cause a pedestrian or the like to be injured or felled in collision or contact with him or her. In order to reduce a possibility of the pedestrian or the like being wounded or in order to relieve a degree of the wound, unified regulations on permission of vehicles with respect to outer protrusions have been established in Japan, Europe and other countries in which outer protrusion requirements are minutely stipulated.

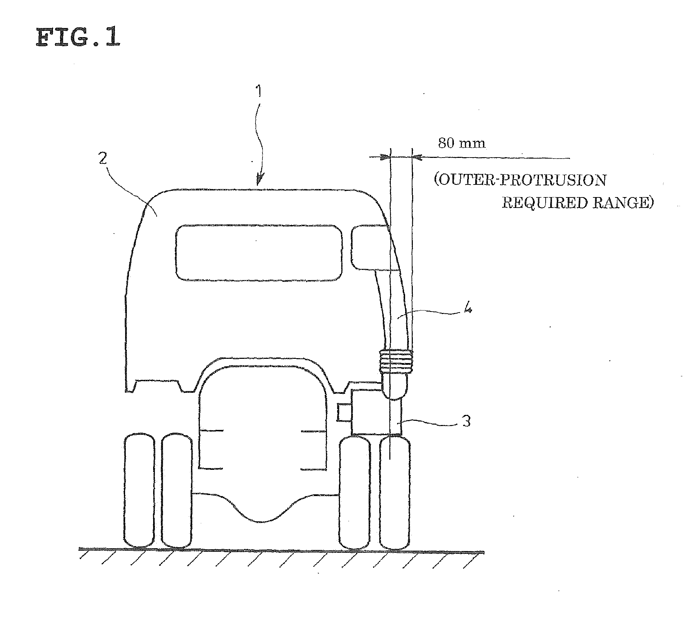

As shown in Fig. 1, arranged on a lower portion on one of laterally opposite sides of a backside of a cab 2 in a truck or other vehicle 1 is an air cleaner 3 for supply of air to an engine (not shown). Arranged along the cab 2 and connected to the air cleaner 3 is a suction duct 4 with an opening through which air is sucked, the sucked air being filtered through the air cleaner 3 for supply as clean air to the engine. A range of 80 mm from an outermost side of the cab 2 is defined as so-called an outer-protrusion required range within which an end of the air cleaner 3 is arranged.

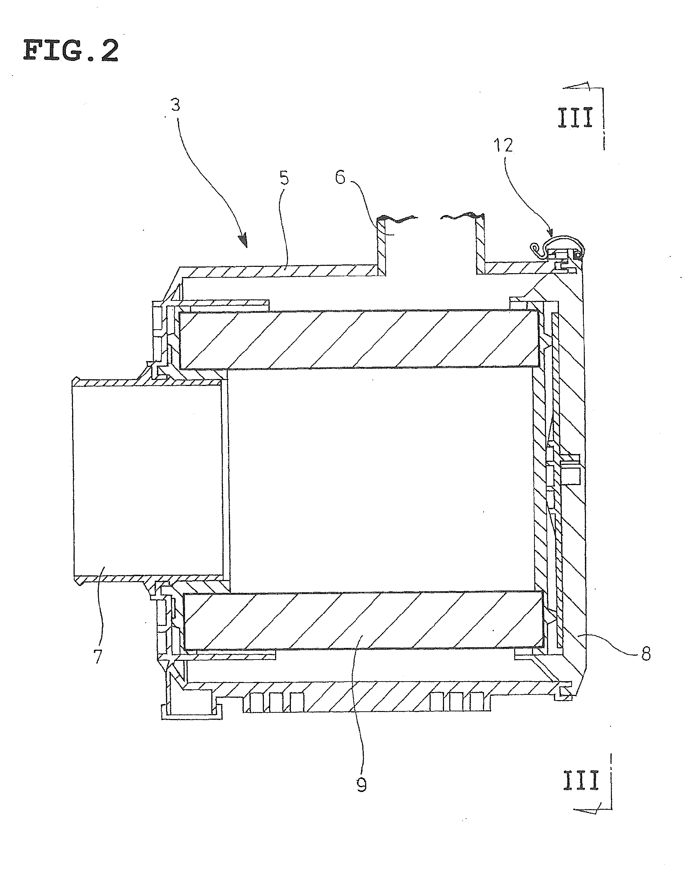

As shown in Fig. 2, the air cleaner 3 comprises a transverse-mounted cylindrical housing body 5 with an inflow port 6 formed on a top of the housing body and communicated with the suction duct 4. The housing body 5 has, at an end thereof, a discharge port 7 communicated with the engine and, at the other end thereof, a removably mounted lid 8. Loaded in the housing body 5 is an element 9 for filtration of air.

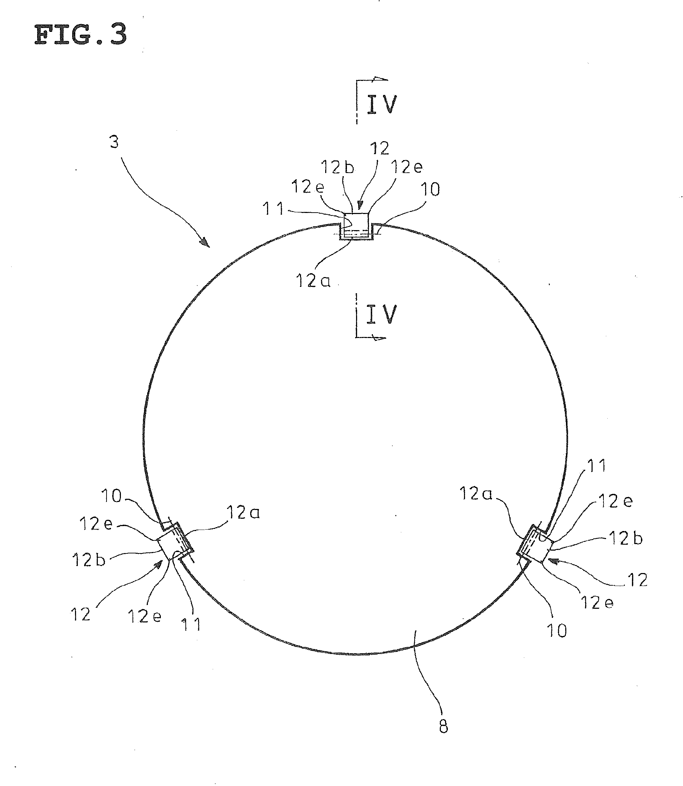

As shown in Fig. 3, the lid 8 is formed, at circumferentially plural positions (at three equidistant positions in the example shown in Fig. 3), with latching grooves 11 each with a supporting pin 10 extending perpendicular to axes of the housing body 5 and lid 8 and each with a latch 12 made of an elastic metallic plate member folded into a required shape.

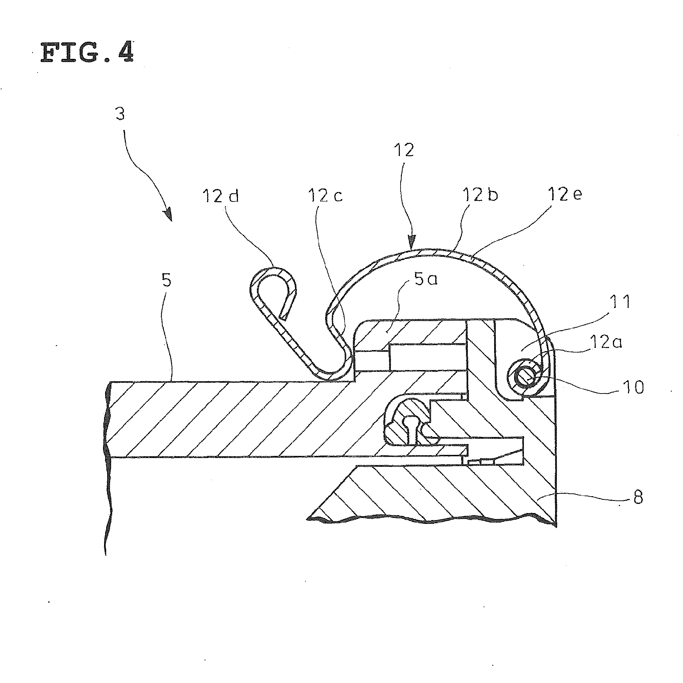

The latch 12 comprises, as shown in Fig. 4, an eyed base end 12a pivoted to the support pin 10, a curved plate portion 12b curvedly extending from the eyed base end 12a toward the housing body 5, a retainer portion 12c formed at a tip of the curved plate portion 12b in U-shaped fold-back manner and removably engageable with a flange 5a of the housing body 5, and a tab 12d extending from the retainer portion 12c and having a round fold-back tip.

In the air cleaner 3 as mentioned in the above, when the element 9 is to be replaced, the lid 8 can be easily released by simple operations of fingering the tab 12d to release the retainer portion 12c from the flange 5a of the housing body 5 and pivotally moving the latch 12 around the support pin 10.

Inversely, when the replacement of the element 9 is finished and the lid 8 is to be set, it suffices that the lid 8 is fitted to the housing body 5 and the latch 12 is pivotally moved around the support pin 10 to engage the retainer portion 12c with the flange 5a of the housing body 5. Thus, the replacement of the element 9 can be effected effectively.

There exists, for example, the following Patent Literature 1 as prior art document relating to the air cleaner 3 mentioned in the above.

### Citation List

### Patent Literature

[Patent Literature 1] JP 2005-098154A

### Summary of Invention

### Technical Problems

However, the outer protrusion requirements stipulate that a plate end is not permitted except for the plate end turned down or the plate end with a protective cover applied thereto and that a nonprotected edge is regarded to be turned down providing it is folded back about 180° or is bent toward a vehicle body so as to prevent a sphere with a diameter of 100 mm from contacting therewith.

However, when the plate end 12e of the latch 12 is exposed as mentioned in the above, the sphere with the diameter of 100 mm can contact with the plate end 12e of the latch 12, so that the outer protrusion requirements cannot be complied with.

Then, it may conceive that the latch 12 is set in a range beyond 80 mm from an outermost side of the cab 2 so as to be outside of the outer-protrusion required range, which may however cause an air cleaner 3 to be arranged laterally more centrally of a vehicle, disadvantageously resulting in deteriorated workability upon replacement of an element 9 loaded within the housing body 5. As a result, it is highly possible that such conception is not structurally put into practice and the practicability becomes low.

It may also conceive that the plate end 12e of the latch 12 provides a rounded (arced) surface with a size in accordance with the outer protrusion requirements, which disadvantageous results in increased machining cost, leading to substantial increase in cost.

It may further conceive that without use of the latch 12, for example, the lid 8 is screwed into the housing body 5. It is feared that such screwed structure applied may have ill workability upon the replacement of the element 9 in comparison with the structure capable of setting/releasing the lid 8 using the latch 12, and the practicability becomes low.

The invention was made in view of the above and has its object to provide a latch protection structure for vehicle-mounted object which can comply with outer protrusion requirements without displacement of a latch outside of an outer-protrusion required range and without machining a plate end of the latch.

### Solution to Problems

The invention is directed to a latch protection structure for a vehicle-mounted object wherein a latch is provided for setting/releasing a lid to and from a vehicle-mounted housing body,
comprising ribs protruded from at least one of said lid and said housing body so as to prevent a sphere with a diameter stipulated in outer protrusion requirements from contacting with the latch.

According to the above measure, a below-mentioned effect will be obtained.

As mentioned in the above, when ribs are protruded from at least one of a lid and a housing body, the ribs protect a plate end of a latch unlike the conventional art where the plate end of the latch is exposed, so that a sphere with a diameter stipulated by outer protrusion requirements is prevented from contacting with the plate end of the latch and thus the outer protrusion requirements can be complied with.

The latch protection structure for the vehicle-mounted object may be applied to an air cleaner with a housing body having an element for filtration of air being loaded therein, which make it unnecessary to set the latch in a range beyond 80 mm from an outermost side of the cab so as to be outside of the outer-protrusion required range, so that the air cleaner is not arranged laterally more centrally of the vehicle, not resulting in deteriorated workability upon replacement of the element loaded in the housing body. Further, there is no need of the plate end of the latch providing a rounded (arced) surface with a size in accordance with the outer protrusion requirements, so that machining cost is suppressed and increase in cost is prevented. Still further, since the latch may be used as it is, unlike for example a structure of screwing a lid into a housing body, there is no concern of deteriorated workability upon the replacement of the element.

### Advantageous Effects of Invention

A latch protection structure for a vehicle-mounted object according to the invention can attain an excellent effect that outer protrusion requirements can be complied with without displacement of a latch outside of an outer-protrusion required range and without machining of a plate end of the latch.

### Brief Description of Drawings

Fig. 1 is a back view showing a cab of a truck or other vehicle with an air cleaner;
Fig. 2 is a sectional side elevation showing a conventional air cleaner;
Fig. 3 is a front view showing the conventional air cleaner and corresponding to a view looking in a direction of arrows III in Fig. 2;
Fig. 4 is an enlarged sectional view showing a latch in the conventional air cleaner and corresponding to a view taken along line IV-IV in Fig. 3;
Fig. 5 is a front view showing an embodiment of a latch protection structure for a vehicle-mounted object according to the invention; and
Fig. 6 is a sectional view taken along line VI-VI in Fig. 5.

### Description of Embodiment

An embodiment of the invention will be described in conjunction with the attached drawings.

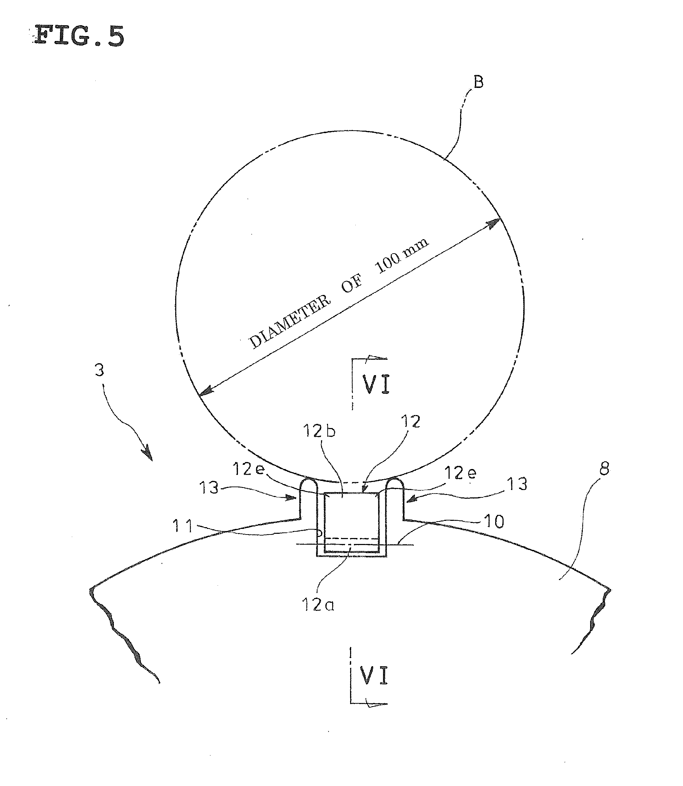

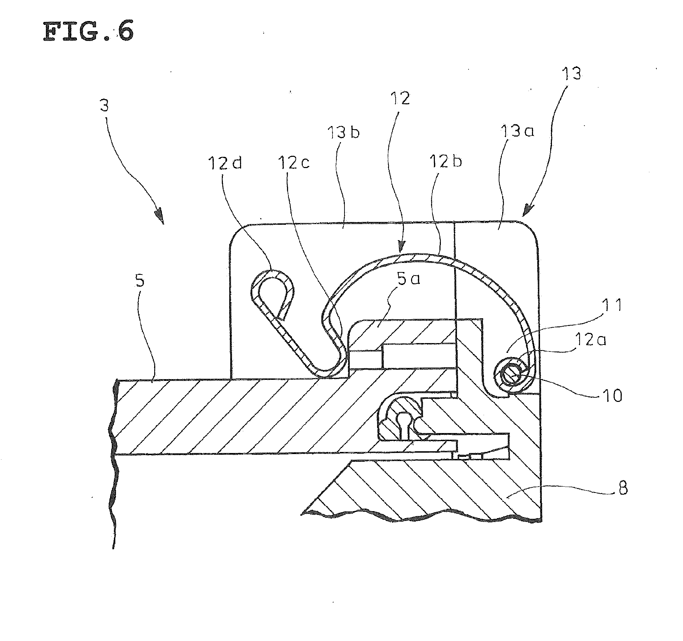

Figs. 5 and 6 show the embodiment of a latch protection structure for a vehicle-mounted object according to the invention in which parts similar to those in Figs. 1-4 are represented by the same reference numerals. The embodiment, which has a fundamental structure similar to that of the conventional art shown in Figs. 1-4, resides in as shown in Figs. 5 and 6 that ribs 13 are protruded from a lid 8 and a housing body 5 for prevention of a sphere B with a diameter of 100 mm stipulated in outer protrusion requirements from contacting with a latch 12.

In the embodiment, the ribs 13 comprise lid-side ribs 13a standing from opposite edges of a latching groove 11 formed on the lid 8 so as to have a height higher than that of the latch 12 as shown in Fig. 5 and housing-body-side ribs 13b standing from the housing body 5 for connection with the lid-side ribs 13a as shown in Fig. 6. Alternatively, both the ribs 13a and 13b may be integrally protruded from the lid 8 or the housing body 5.

A tip of the rib 13 is rounded so as to comply with outer protrusion requirements.

Next, a mode of operation of the above embodiment will be described.

As mentioned in the above, when the ribs 13 are protruded from the lid 8 and the housing body 5, unlike the conventional art where the plate end 12e of the latch 12 is exposed, the plate end 12e of the latch 12 is protected by the ribs 13 as shown in Fig. 5 so as to prevent a sphere B with a diameter of 100 mm stipulated in the outer protrusion requirements from contacting with the plate end 12e of the latch 12, and thus the outer protrusion requirements can be complied with.

Thus, there is no need of the latch 12 being set in a range beyond 80 mm from outermost side of the cab 2 so as to be outside of the outer-protrusion required range. As a result, the air cleaner 3 is not arranged laterally more centrally of the vehicle, so that there is no concern of deteriorated workability upon the replacement of the element 9 loaded in the housing body.

Further, there is no need of the plate end 12e of the latch 12 providing a rounded (arced) surface with a size in accordance with the outer protrusion requirements, which suppresses the machining cost and prevents increase in cost.

Still further, since the latch 12 may be used as it is, there is no concern of deteriorated workability upon replacement of the element 9 unlike for example a structure where the lid 8 is screwed into the housing body 5.

Thus, the outer protrusion requirements can be complied with without displacement of the latch outside of an outer-protrusion required range and without machining a plate end of the latch.

It is to be understood that a latch protection structure for a vehicle-mounted object according to the invention is not limited to the above embodiment and that various changes and modifications may be made without departing from the scope of the invention. For example, it is applicable not only to a latch for an air cleaner but to any vehicle-mounted object provided that the object has a latch for setting/releasing a lid to and from a vehicle-mounted housing body.

### Reference Signs List

- 1: vehicle
- 3: air cleaner (vehicle-mounted object)
- 5: housing body
- 5a: flange
- 6: inflow port
- 7: discharge port
- 8: lid
- 9: element
- 12: latch
- 12e: plate end
- 13: rib
- 13a: lid-side rib
- 13b: housing-body-side rib
- B: sphere

## Claims

1. A latch protection structure for a vehicle-mounted object wherein a latch is provided for setting/releasing a lid to and from a vehicle-mounted housing body,
comprising ribs protruded from at least one of said lid and said housing body so as to prevent a sphere with a diameter stipulated in outer protrusion requirements from contacting with the latch.

2. The latch protection structure for the vehicle-mounted object as claimed in claim 1 applied to an air cleaner with said housing body having an element for filtration of air loaded therein.
